# EUROPEAN PATENT APPLICATION

(11) **EP 2 019 536 A1**
(43) Date of publication of application: **28.01.2009**
(21) Application number: 07252938.1
(22) Date of filing: 25.07.2007
(51) Int. Cl.: H04M 1/02

(54) **Portable electronic device with replaceable casing, panel and/or press key**

(71) Applicant: Giga-Byte Technology Co., Ltd., Xindian City Taipei County 231 (TW); Giga-Byte Communications, Inc., Hsin-Tien Taipei Hsien (TW)
(72) Inventor: Hsu, Kuo-Tai, Taipei Hsien (TW)
(74) Representative: Cheyne, John Robert Alexander M.

(57) **Abstract**

A portable electronic device (1) with replaceable casing (11), panel (130) and/or press key (140) includes a body (10) which is the main component of the electronic device, and a casing (11) installed at the exterior of the body (10). The casing (11) includes components such as a panel (130) and a press key (140), wherein a plurality of insert structures (15) are installed between the body (10) and the casing (11), the panel (130) or the press key (140), and each insert structure (15) includes an insert pin (150) and an insert hole (151) corresponding to the insert pin (150), and the insert pin (150) is detachably inserted into the corresponding insert hole (151), so that a user can freely configure the portable electronic device (1) with different casings (11), panels (130) and/or press keys (140) based on personal preference.

## Description

### BACKGROUND OF THE INVENTION

### 1. Field of the Invention

The present invention relates to an electronic product, and more particular to a portable electronic device with a structure of replaceable casing, panel and/or press key.

### 2. Description of Prior Art

Since the present design of portable electronic products tends to be personalized, and many products of this sort come with a changeable casing and a replaceable function, and thus they become popular to consumers. However, the traditional way of changing the casing of the products of this sort is limited by the structure of the product, so that its change is limited and does not allow users to freely change or configure a casing in their own style. Particularly, most casings of the products of this sort are fixed by tenons and slides. If a user removes or installs a casing carelessly, the tenons may be broken or damaged, such as the case disclosed in R.O.C. Pat. No. 505366 entitled "Mobile phone casing changing apparatus.

In view of the foregoing shortcomings of the prior art, the inventor of the present invention based on years of experience in the related industry to conduct experiments and modifications, and finally developed a portable electronic device with a replaceable casing, panel and/or press key in accordance with the present invention.

### SUMMARY OF THE INVENTION

Therefore, it is a primary objective of the present invention to provide a portable electronic device with a replaceable casing, panel and/or press key, wherein specific positions of the portable electronic device are reserved for a plurality of insert pins or insert holes to match the casing, panel or press key, provide an easy way for the installation or removal of the aforementioned components, and allow users to freely configure the portable electronic device with a different casing, panel and/or press key based on the user's personal preference.

To achieve the foregoing objective, the present invention provides a portable electronic device with a replaceable casing, comprising: a body which is a main part of the electronic device; a casing disposed at the exterior of the body; a plurality of insert structures disposed between the body and the casing, and each insert structure including an insert pin and an insert hole corresponding to the insert pin, and the insert pin being detachably inserted into the corresponding insert hole.

To achieve the foregoing objective, the present invention provides a portable electronic device with a replaceable panel, comprising: a body which is a main part of the electronic device; a cover disposed at the front side of the body, and having a panel disposed horizontally on the panel, a plurality of side panels disposed around the panel, and the side panels surrounding the panel to form a panel opening for installing the panel therein; wherein a plurality of insert structures are disposed between the body and the panel, and each insert structure includes an insert pin and an insert hole corresponding to the insert pin, and the insert pin is detachably inserted into the corresponding insert hole.

To achieve the foregoing objective, the present invention provides a portable electronic device with a replaceable press key, comprising: a body which is a main part of the electronic device; a casing disposed at the exterior of the body and having a press key opening; and a plurality of press keys installed in the press key opening of the casing; wherein a plurality of insert structures are disposed between the body and the press key, and each insert structure includes an insert pin, and an insert hole corresponding to the insert pin, and the insert pin is detachably inserted into the corresponding insert hole.

### BRIEF DESCRIPTION OF DRAWINGS

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
Fig. 1 is an exploded view of a first preferred embodiment of the present invention;
Fig. 2 is a section view of a first preferred embodiment of the present invention;
Fig. 3 is a section view of a mode of an insert structure as depicted in Fig. 2;
Fig. 4 is a section view of another mode of an insert structure as depicted in Fig. 2;
Fig. 5 is an exploded view of a second preferred embodiment of the present invention;
Fig. 6 is schematic planar view of a configuration after making a change of Fig. 5;
Fig. 7 is schematic planar view of another configuration after making a change of Fig. 5;
Fig. 8 is an exploded view of a third preferred embodiment of the present invention;
Fig. 9 is an exploded view of a fourth preferred embodiment of the present invention;
Fig. 10 is an exploded view of a fifth preferred embodiment of the present invention;

### DETAILED DESCRIPTION OF THE INVENTION

The technical characteristics, features and advantages of the present invention will become apparent in the following detailed description of the preferred embodiments with reference to the accompanying drawings. The drawings are provided for reference and illustration only, but not intended for limiting the present invention.

The present invention provides a portable electronic device with a replaceable casing, panel and/or press key, such that users can install a casing according to their personal preference and further installs a panel or a press key or simply allow users to switch the panel or change the panel and press key by different configurations. Of course, the present invention can provide or change various different combinations of press keys as well.

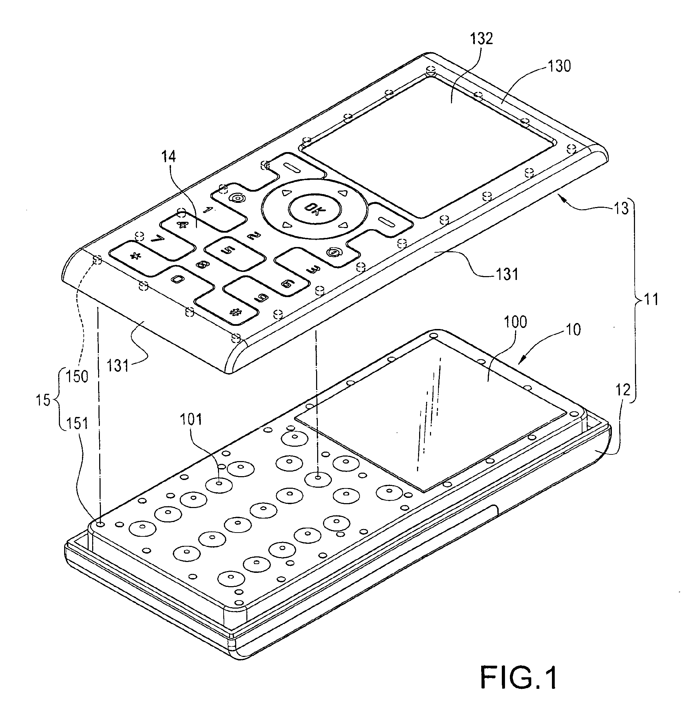

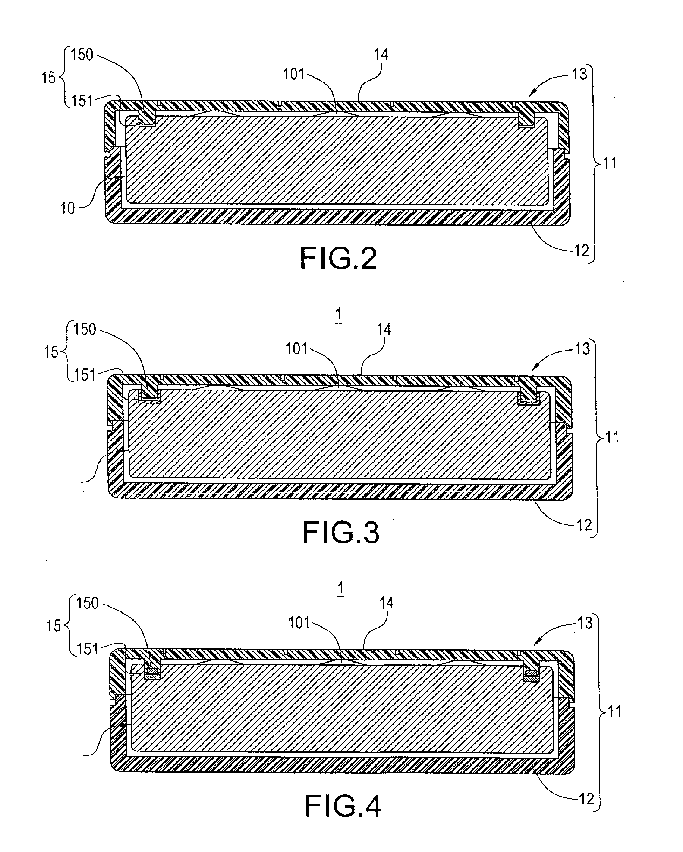

Referring to Figs. 1 and 2 for an exploded view and a section view of a first preferred embodiment of the present invention, a single casing used for installation and replacement is illustrated, and the portable electronic device 1 can be a cell phone having a phone body 10, and a casing 11 disposed at the exterior of the body 10; wherein the body 10 is a main part consisting of electronic and communication components of the cell phone, and basically including a display screen 100 and a plurality of pressing units 101 arranged on the body 10 and corresponding to a circuit control board (not shown in the figure) in the body 10, such that after one of the pressing units is pressed, an instruction is inputted to the body 10 to let users know about the operating status through a display screen 100 and facilitate users to operate the cell phone.

The casing 11 further comprises a base 12 disposed at the back of the body 10 and a cover 13 covered onto the front side of the body 10. In this embodiment, only the cover 13 is replaced, but the base 12 remains in its irreplaceable form at the back of the body 10, and the cover 13 can be integrally formed and comprised of a panel 130 disposed horizontally on the body 10, a plurality of side panels 131 disposed around the panel 130, a viewing window 132 disposed at the position of a display screen 100 of the body 10 corresponding to the panel 130 and a plurality of press keys 14, each disposed on a corresponding pressing unit 101 of the body 10.

As described above, this embodiment comprises a plurality of insert structures 15 between the body 10 and the cover 13 of the casing 11, and each insert structure 15 includes an insert pin 150, and an insert hole 151 corresponding to the insert pin 150 for facilitating the insertion of the insert pin 150 into the corresponding insert hole 151, such that the friction produced between the insert pin 150 and an internal wall of the insert hole 151 secures the connection of the body 10 and the cover 13. In the meantime, users can remove the cover 13 from the body 10 easily to facilitate users to change the cover 13. The insert pin 150 and insert hole 151 as shown in the figure may be switched, wherein the insert pin 150 is situated on an internal side of the cover 13, and the insert hole 151 is situated on the body 10, but their positions can be switched in the way that the insert pin 150 is situated on the body 10, and the insert hole 151 is situated on an internal side of the cover 13.

Referring to Fig. 3, each insert structure 15 further installs a rubber ring 152 around the internal periphery of the insert hole 151 for enhancing the connection. In Fig. 4, a magnet 153 and a ferromagnetic component 154 are disposed respectively between an end of the insert pin 150 of the insert structure 15 and insert hole 151, and the ferromagnetic component 154 can be an iron ingot or an iron plate or another magnet having a magnet pole opposite to that of the magnet 153 for a better connection through the magnetic attraction.

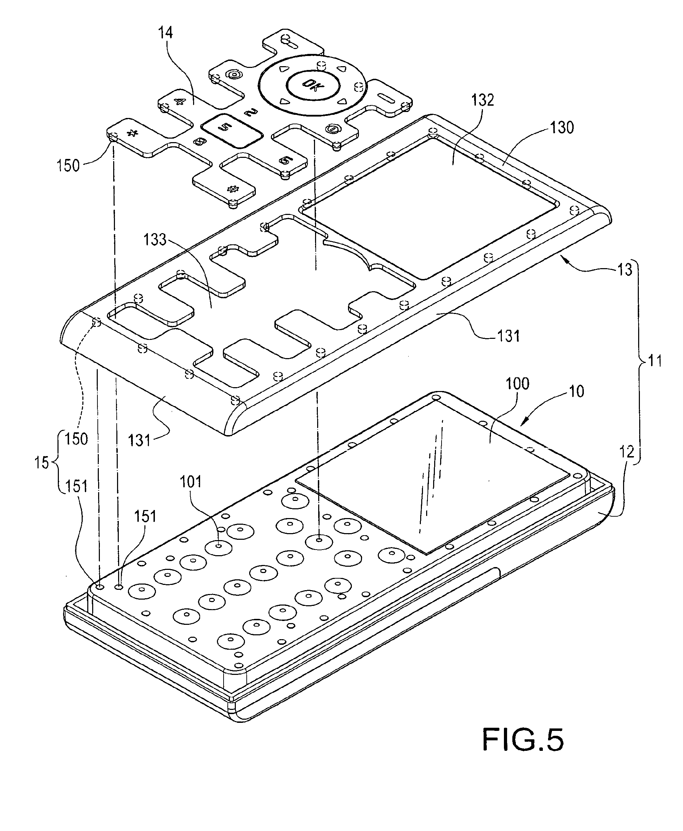

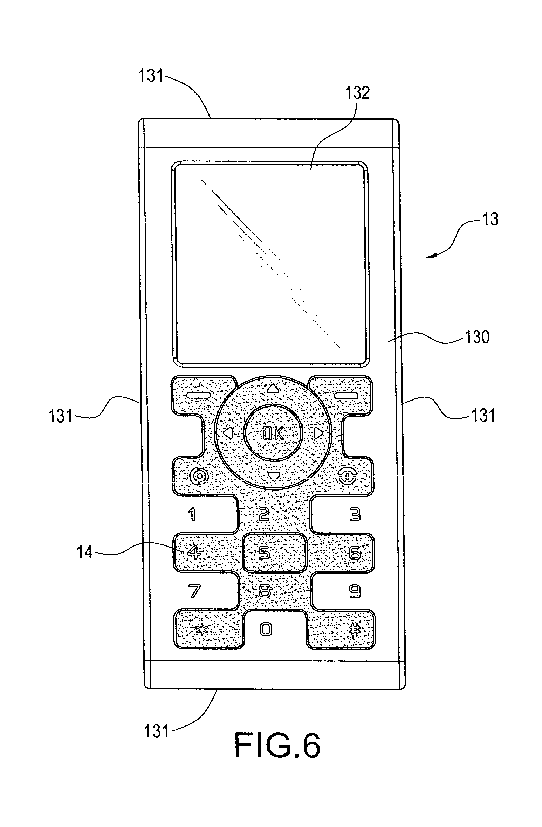

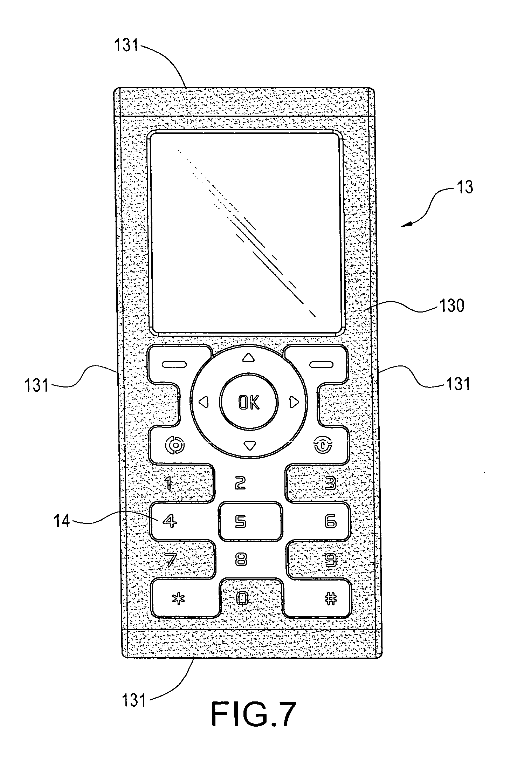

Referring to Fig. 5 for an exploded view of a second preferred embodiment of the present invention, this embodiment also adopts a cell phone for the illustration. In the second preferred embodiment, the casing 11 and the press key 14 are replaced; wherein, the cover 13 of the casing 11 is separated from each press key 14, and each press key 14 constitutes one or more puzzles (and one puzzle is shown in the figure for the illustration purpose only), and the panel 130 has a press key opening 133 in a shape that matches with the shape of the combined puzzles of each press key 14 for installing each press key 14 into the press key opening 133. In the meantime, the insert structure 15 is also installed between the body 10 and each press key 14. Therefore, the function of replacing the cover 13 can be achieved by the insert structure 15, and each press key 14 can also be replaced through the insert structure 15 to match different models of covers 13, or the cover 13 matches various press keys 14 as shown in Figs. 6 and 7.

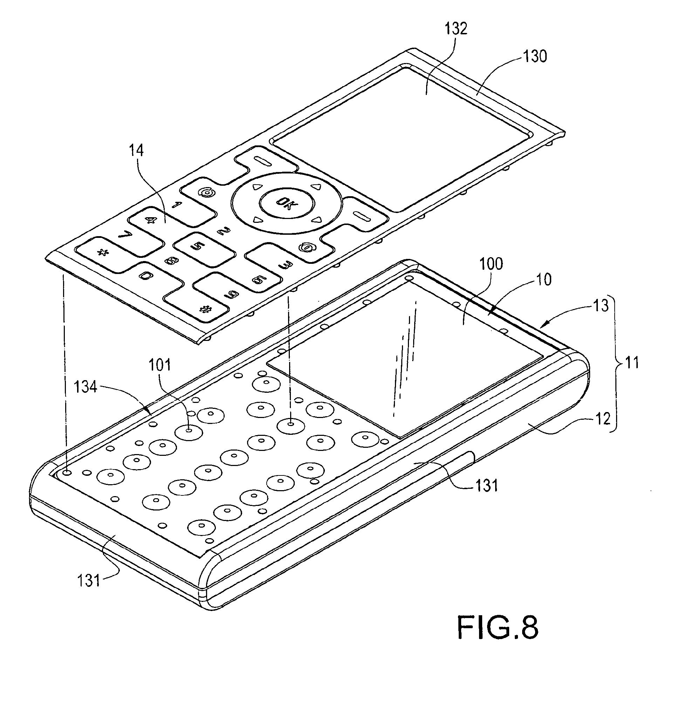

Referring to Fig. 8 for an exploded view of a third preferred embodiment of the present invention, the panel 130 of the cover 13 is removed, and the side panels 131 of the cover 13 constitute a frame, and the side panels 131 surround the cover 13 to form a panel opening 134 for precisely installing the panel 130, and then the insert structure 15 is installed between the body 10 and the panel 130, such that the panel 130 can be removed and replaced to match the cover 13 with another model of panel 130.

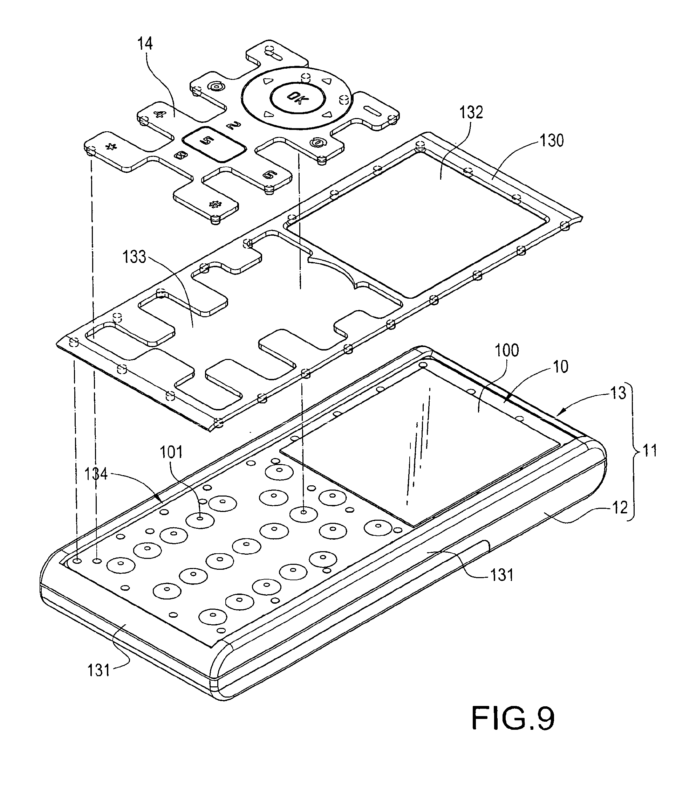

Referring to Fig. 9 for an exploded view of a fourth preferred embodiment of the present invention, this embodiment integrates the second and third embodiments. Similar to the third embodiment, the panel 130 can be replaced, and similar to the second embodiment, each press key 14 can be replaced, so that the cover 13, panel 130 and press key 14 can match with each other or a more diversified combination is provided.

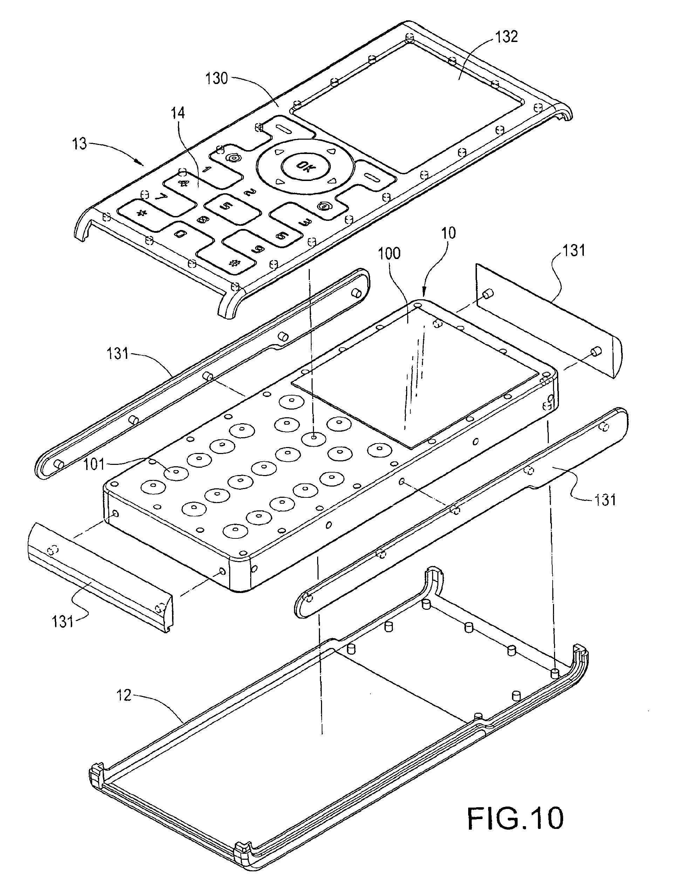

Referring to Fig. 10 for an exploded view of a fifth preferred embodiment of the present invention, each insert structure 15 and one or more puzzles are used to constitute the base 12 and the cover 13 of the casing 11 or the panel 130, side panel 131 and the press key 14 so that users can design and combine the puzzles with a design based on personal preference in order to achieve diversified and variable combinations.

With the foregoing structure, the portable electronic device with replaceable casing, panel and/or press key can be achieved.

Therefore, the portable electronic device with a replaceable casing, panel and/or press key of the invention reserves specific positions on the body 10 of the portable electronic device 1 for the plurality of insert pins 150 or insert holes 151 to match with the positions of the corresponding insert hole 151 or insert pin 150 of the casing 11, such that users can freely combine a different casing 11, panel 130 or even press key 14, and the portable electronic device 1 can further meet consumer requirements and allow users to freely configure the portable electronic device based on personal preference.

The present invention is illustrated with reference to the preferred embodiment and not intended to limit the patent scope of the present invention. Various substitutions and modifications have suggested in the foregoing description, and other will occur to those of ordinary skill in the art. Therefore, all such substitutions and modifications are intended to be embraced within the scope of the invention as defined in the appended claims.

## Claims

1. A portable electronic device (1) with a replaceable casing (11), comprising:
a body (10), constituting a main part of the electronic device (1);
a casing (11), installed at the exterior of the body (10); and
a plurality of insert structures (15), disposed between the body (10) and the casing (11), and
each insert structure (15) having an insert pin (150) and an insert hole (151) corresponding to the insert pin (150), and the insert pin (150) being detachably inserted into the corresponding insert hole (151).

2. The portable electronic device (1) with a replaceable casing (11) as recited in claim 1, wherein the casing (11) further comprises a base (12) disposed at the back of the body (10), and a cover (13) covered onto a front side of the body (10), and the insert structure (15) is disposed between the body (10) and the cover (13).

3. The portable electronic device (1) with a replaceable casing (11) as recited in claim 2, wherein the insert structure (15) is disposed between the body (10) and the base (12).

4. The portable electronic device (1) with a replaceable casing (11) as recited in claim 2, wherein the cover (13) further includes a panel (130) disposed horizontally onto the body (10), and a plurality of side panels (131) formed around the panel (130), and the side panel (131) forms a panel opening (134) around the panel (130) for inserting the panel (130) into the panel opening (134), and the insert structure (15) is disposed between the body (10) and the panel (130).

5. The portable electronic device (1) with a replaceable casing (11) as recited in claim 4, further comprising a plurality of press keys (140), and the panel (130) includes a press key opening (133) in a shape corresponding to the shape of the press keys (140), such that the press keys (140) can be installed into the press key opening (133), and the insert structure (15) is disposed between the body (10) and each press key (140).

6. The portable electronic device (1) with a replaceable casing (11) as recited in claim 2 or 3, wherein the cover (13) includes a panel (130) disposed horizontally on the body (10), and the panel (130) includes a press key opening (133) for installing a plurality of press keys (140) with a corresponding shape therein, and the insert structure (15) is disposed between the body (10) and each press key (140).

7. The portable electronic device (1) with a replaceable casing (11) as recited in claim 1, further comprising a magnet (153) and a ferromagnetic component (154) for attracting the magnet (153) are disposed between an end of the insert pin (150) of the insert structure (15) and the insert hole (151).

8. The portable electronic device (1) with a replaceable casing (11) as recited in claim 7, wherein the ferromagnetic component (154) is made of iron.

9. The portable electronic device (1) with a replaceable casing (11) as recited in claim 7, wherein the ferromagnetic component (154) is a magnet.

10. The portable electronic device (1) with a replaceable casing (11) as recited in claim 1, wherein the insert structure (15) includes a rubber ring (152) disposed around the periphery of an internal wall of the insert hole (151).

11. A portable electronic device (1) with replaceable panel (130), comprising:
a body (10), constituting a main part of the electronic device (1);
a cover (13), disposed on a front panel of the body (10), and having a panel (130) disposed horizontally on the body (10) and a plurality of side panels (131) formed around the panel (130), and the side panels (131) surrounding the panel (130) to form a panel opening (134) for installing the panel (130) into the panel opening (134);
a plurality of insert structures (15), disposed between the body (10) and the panel (130), and
each insert structure (15) having an insert pin (150) and an insert hole (151) corresponding to the insert pin (150), and the insert pin (150) being detachably inserted into the
corresponding insert hole (151).

12. The portable electronic device (1) with a replaceable panel (130) as recited in claim 11, further comprising a plurality of press keys (140), and the panel (130) includes a press key opening (133) in a shape corresponding to the shape of the press keys (140), such that the press keys (140) can be installed into the press key opening (133), and the insert structure (15) is disposed between the body (10) and each press key.

13. The portable electronic device (1) with a replaceable panel (130) as recited in claim 11 or 12, further comprising a magnet (153) and a ferromagnetic component (154) for attracting the magnet (153) are disposed between an end of the insert pin (150) of the insert structure (15) and the insert hole (151).

14. The portable electronic device (1) with a replaceable panel (130) as recited in claim 13, wherein the ferromagnetic component (154) is made of iron.

15. The portable electronic device (1) with a replaceable panel (130) as recited in claim 13, wherein the ferromagnetic component (154) is a magnet.

16. The portable electronic device (1) with a replaceable panel (130) as recited in claim 11 or 12, wherein the insert structure (15) includes a rubber ring (152) disposed around the periphery of an internal wall of the insert hole (151).

17. A portable electronic device (1) with a replaceable press key (140), comprising:
a body (10), constituting a main part of the electronic device (1);
a casing (11), disposed at the exterior of the body (10), and having a press key opening (133); and
a plurality of press keys (140), installed in the press key opening (133) of the casing (11);
a plurality of insert structures (15), disposed between the body (10) and the press keys (140), and each insert structure (15) having an insert pin (150) and an insert hole (151) corresponding to the insert pin (150), and the insert pin (150) being detachably inserted into the corresponding insert hole (151).

18. The portable electronic device (1) with a replaceable press key (140) as recited in claim 17, further comprising wherein a magnet (153) and a ferromagnetic component (154) for attracting the magnet (153) are disposed between an end of the insert pin (150) of the insert structure (15) and the insert hole (151).

19. The portable electronic device (1) with a replaceable press key (140) as recited in claim 18, wherein the ferromagnetic component (154) is made of iron.

20. The portable electronic device (1) with a replaceable press key (140) as recited in claim 18, wherein the ferromagnetic component (154) is a magnet.

21. The portable electronic device (1) with a replaceable press key (140) as recited in claim 17, wherein the insert structure (15) includes a rubber ring (152) disposed around the periphery of an internal wall of the insert hole (151).

## Amended claims

### Amended claims in accordance with Rule 137(2) EPC.

**1.** A portable electronic device (1) with a replaceable casing (11), comprising:
a body (10), constituting a main part of the electronic device (1);
a casing (11), installed at the exterior of the body (10); and
a plurality of insert structures (15), disposed between the body (10) and the casing (11), and
each insert structure (15) having an insert pin (150) and an insert hole (151) corresponding to the insert pin (150), and the insert pin (150) being detachably inserted into the corresponding insert hole (151), **characterized in that** the insert structure (15) includes a rubber ring (152) disposed around the periphery of an internal wall of the insert hole (151).

**2.** The portable electronic device (1) with a replaceable casing (11) as recited in claim 1,
wherein the casing (11) further comprises a base (12) disposed at the back of the body (10), and a cover (13) covered onto a front side of the body (10), and the insert structure (15) is disposed between the body (10) and the cover (13).

**3.** The portable electronic device (1) with a replaceable casing (11) as recited in claim 2,
wherein the insert structure (15) is disposed between the body (10) and the base (12).

**4.** The portable electronic device (1) with a replaceable casing (11) as recited in claim 2,
wherein the cover (13) further includes a panel (130) disposed horizontally onto the body (10), and a plurality of side panels (131) formed around the panel (130), and the side panel (131) forms a panel opening (134) around the panel (130) for inserting the panel (130) into the panel opening (134), and the insert structure (15) is disposed between the body (10) and the panel (130).

**5.** The portable electronic device (1) with a replaceable casing (11) as recited in claim 1, further comprising a magnet (153) and a ferromagnetic component (154) for attracting the magnet (153) are disposed between an end of the insert pin (150) of the insert structure (15) and the insert hole (151).

**6.** The portable electronic device (1) with a replaceable casing (11) as recited in claim 5,
wherein the ferromagnetic component (154) is made of iron.

**7.** The portable electronic device (1) with a replaceable casing (11) as recited in claim 5,
wherein the ferromagnetic component (154) is a magnet.
